# FASCICULE DE BREVET EUROPEEN

(11) **EP 3 155 257 B1**
(45) Date de publication et mention de la délivrance du brevet: **22.08.2018**
(21) Numéro de dépôt: 15727658.5
(22) Date de dépôt: 08.06.2015
(51) Int. Cl.: F03D 1/06

(54) **ROTOR ÉOLIEN DE TYPE SAVONIUS**
SAVONIUS ROTOR EINES WINDRADES
WIND TURBINE ROTOR OF SAVONIUS TYPE

(30) Priorité: 10.06.2014 BE 201400438
(43) Date de publication de la demande: 19.04.2017
(73) Titulaire: Philéole, 1331 Rixensart (BE)
(72) Inventeur: DEJAEGERE, Philippe, 1331 Rosières (BE)
(74) Mandataire: Gevers Patents
(86) Numéro de dépôt international: PCT/EP2015/062732
(87) Numéro de publication internationale: WO 2015/189155

(56) Documents cités:
- WO-A1-99/04164
- WO-A1-2013/136142
- DE-A1- 2 225 988
- DE-C1- 821 930
- US-A1- 2007 029 807
- US-A1- 2008 191 487
- US-A1- 2009 285 689
- US-A1- 2013 121 835
- US-B1- 6 345 957
- US-B1- 7 766 600

## Description

La présente invention concerne un rotor éolien de type Savonius comprenant un arbre tubulaire sur lequel sont montés un nombre *n* ≥ 1 de segments faisant partie d'une hélice, chaque segment étant formé par deux pales de section semi-circulaire, les deux pales présentant une extension axiale hélicoïdale et étant disposées en quinconce par rapport à l'arbre de telle façon a former une pale concave et une pale convexe qui forment ensemble un passage d'air concave-convexe à travers l'arbre ; chaque pale présentant une première et une deuxième extrémités, les deux pales étant fixées par leur première extrémité à l'arbre ; lequel arbre présente un ensemble de *m* ≥ 1 passages d'air, chaque passage d'air étant formé chaque fois de deux ouvertures disposées diamétralement opposées sur l'arbre.

Une génératrice éolienne transforme l'énergie cinétique contenue dans le vent en énergie mécanique de rotation. Cette énergie peut alors être transformée en énergie électrique si un générateur électrique est couplé à la génératrice éolienne. Le générateur électrique, à son tour, va transformer l'énergie mécanique fournie par la génératrice éolienne en énergie électrique.

Les rotors utilisés dans les génératrices éoliennes sont divisés en deux grands groupes selon leur mode de fonctionnement aérodynamique, d'une part les rotors mus par les forces de portance, et d'autre part les rotors mus par les forces de traînée. Ces derniers ont connu un développement important grâce à l'invention, entre autres, du rotor de Savonius. La simplicité du rotor de Savonius contrebalance sa relativement faible productivité quand elle est comparée à celle des rotors mus par les forces de portance.

Les génératrices éoliennes de type Savonius sont appropriées aux zones de vents gênées par le relief ou par les habitations, car elles ont l'avantage de pouvoir capter des vents très faibles (par exemple à partir de 2 ms⁻¹) et venant de toutes les directions. De plus, elles sont peu bruyantes et leur faible encombrement permet d'intégrer ces génératrices éoliennes aux bâtiments (efficace dans le cas de petites installations personnelles), sans en dénaturer l'esthétique.

Une génératrice éolienne comprend une partie mobile, appelée rotor. Le rotor comprend un ensemble formé par des segments, les segments sont constitués de pales, et par un arbre qui les unit. Le rotor de Savonius classique est un rotor à axe vertical, il comprend un arbre central de rotation, de forme cylindrique, de section non négligeable vis-à-vis de l'écoulement aérodynamique dans la partie centrale du rotor. Le fonctionnement du rotor de Savonius est basé sur le principe de la traînée différentielle. Le fonctionnement du rotor de Savonius repose sur un couple aérodynamique induit par une déflexion de l'écoulement sur les pales. Il en résulte un couple entraînant la rotation de l'ensemble, qui à son tour entraîne une génératrice éolienne. L'arbre du rotor de Savonius, lorsqu'il est constitué d'une pièce pleine, constitue en pratique un obstacle à l'écoulement d'air en réduisant l'efficacité du rotor ainsi constitué.

La demande de brevet US 7,766,600 divulgue aux figures 2 et 3 un rotor éolien de Savonius comprenant un arbre perforé auquel s'accroche par des rivets une paire de pales demi-cylindriques, de forme hélicoïdale, légèrement désaxées, rigides ou pliables. Ceci forme l'hélice du rotor. Cet arbre perforé permet ainsi un passage d'air depuis une des pales vers l'autre pale. La forme hélicoïdale des pales, c'est-à-dire la forme du corps des pales, est donnée par une structure formée par des rayons lesquels sont aussi accrochés à l'arbre. Les perforations dans l'arbre présentent soit une forme allongée au sens vertical, soit une forme arrondie, soit une forme polygonale.

La fabrication des pales divulguées dans US 7,766,600 est compliquée. Il est difficile de plier la matière relativement rigide pour donner aux pales leur forme hélicoïdale. De plus, la grandeur des pales est limitée par la taille des moules de fabrication. La structure formée par les rayons et l'assemblage des pales sur l'arbre est aussi complexe. Le rotor divulgué présente des efforts considérables aux points de fixation éoliennes aux bâtiments (efficace dans le cas de petites installations personnelles), sans en dénaturer l'esthétique.

Une génératrice éolienne comprend une partie mobile, appelée rotor. Le rotor comprend un ensemble formé par des segments, les segments sont constitués de pales, et par un arbre qui les unit. Le rotor de Savonius classique est un rotor à axe vertical, il comprend un arbre central de rotation, de forme cylindrique, de section non négligeable vis-à-vis de l'écoulement aérodynamique dans la partie centrale du rotor. Le fonctionnement du rotor de Savonius est basé sur le principe de la traînée différentielle. Le fonctionnement du rotor de Savonius repose sur un couple aérodynamique induit par une déflexion de l'écoulement sur les pales. Il en résulte un couple entraînant la rotation de l'ensemble, qui à son tour entraîne une génératrice éolienne. L'arbre du rotor de Savonius, lorsqu'il est constitué d'une pièce pleine, constitue en pratique un obstacle à l'écoulement d'air en réduisant l'efficacité du rotor ainsi constitué.

Le document US 2008/0191487 A1 décrit un rotor éolien de type Savonius comprenant une pluralité de pales fixées à un arbre par des supports. La fixation laisse un espace entre les pales et l'arbre qui permet à l'air de passer.

Le document US 2009/0285689 A1 décrit un rotor éolien de type Savonius comprenant une pluralité de pales fixées ensemble autour d'un arbre de façon à laisser un espace entre les pales et l'arbre. Cet espace permet à l'air de passer.

Le document US 2013/0121835 A1 décrit un rotor éolien de type Savonius comprenant une pluralité de pales fixées à un arbre par des supports. La fixation laisse un espace entre les pales et l'arbre qui permet à l'air de passer.

Le document US 6,345,957 A1 divulgue un rotor éolien Savonius avec les pales semi-circulaires forment ensemble un passage d'air concave-convexe à travers l'arbre.

La demande de brevet US 7,766,600 divulgue aux figures 2 et 3 un rotor éolien de Savonius comprenant un arbre perforé auquel s'accroche par des rivets une paire de pales demi-cylindriques, de forme hélicoïdale, légèrement désaxées, rigides ou pliables. Ceci forme l'hélice du rotor. Cet arbre perforé permet ainsi un passage d'air depuis une des pales vers l'autre pale. La forme hélicoïdale des pales, c'est-à-dire la forme du corps des pales, est donnée par une structure formée par des rayons lesquels sont aussi accrochés à l'arbre. Les perforations dans l'arbre présentent soit une forme allongée au sens vertical, soit une forme arrondie, soit une forme polygonale.

La fabrication des pales divulguées dans US 7,766,600 est compliquée. Il est difficile de plier la matière relativement rigide pour donner aux pales leur forme hélicoïdale. De plus, la grandeur des pales est limitée par la taille des moules de fabrication. La structure formée par les rayons et l'assemblage des pales sur l'arbre est aussi complexe. Le rotor divulgué présente des efforts considérables aux points de fixation des pales sur l'arbre. De plus, l'arbre présente en rotation des vibrations parasites, ce qui diminue le rendement du rotor. Le couple moteur produit par le rotor présente aussi des fluctuations non désirées qui se traduisent dans une rotation saccadée de l'hélice.

Il y a donc un besoin de veiller à proposer un rotor éolien de construction et d'assemblage plus simple, plus rapide, qui puisse être fabriqué en grande série, et produit à faible coût. Un besoin d'un rotor dont le couple moteur fournit par ledit rotor à chaque rotation soit lissé pour permettre des rotations de l'hélice relativement constantes et régulières, et ainsi améliorer le rendement dudit rotor.

A cette fin, l'invention propose un rotor éolien de type Savonius comprenant un arbre tubulaire sur lequel sont montés un nombre n ≥ 1 de segments faisant partie d'une hélice, chaque segment étant formé par deux pales de section semi-circulaire, les deux pales présentant une extension axiale hélicoïdale et étant disposées en quinconce par rapport à l'arbre de telle façon à former une pale concave et une pale convexe qui forment ensemble un passage d'air concave-convexe à travers l'arbre; chaque pale présentant une première et une deuxième extrémités, les deux pales étant fixées par leur première extrémité à l'arbre ; lequel arbre présente un ensemble de m ≥ 1 passages d'air, ledit rotor étant caractérisé en ce que :
chaque segment présente une largeur décroissante à partir de la première extrémité vers la deuxième extrémité de chaque pale, les n segments faisant partie de l'hélice sont montés sur l'arbre de telle façon qu'un premier (P1) point situé sur la deuxième extrémité d'un premier des n segments et un deuxième (P2) point situé sur la deuxième extrémité d'un dernier des n segments au même endroit que le premier (P1) point, sont décales en rotation un angle α, le décalage en rotation du segment ni par rapport au segment ni+1, dont 1 ≤ i < n, faisant partie de l'hélice est la relation α / n ; et les m passages d'air dudit ensemble de m passages d'air sont chaque fois décalés l'un par rapport à l'autre de telle façon que le m^{ième} passage d'air est décalé en rotation sur un angle α par rapport au premier des m passages d'air.

Une hélice constituée par une superposition de segments facilite sa fabrication, les segments peuvent être fabriqués séparément et peuvent être fabriqués par des techniques d'injection.

La diminution de l'épaisseur des pales entre une première extrémité et une deuxième extrémité permet d'adapter aux efforts imposés à l'éolienne la résistance des matériaux utilisés pour fabriquer l'éolienne tout en réduisant ainsi le risque de bris par fatigue. Ainsi, les efforts aux points de fixation entre les segments et l'arbre sont concentrés dans les zones les plus résistantes desdits segments. Au vu de la façon dont l'invention est réalisée, l'effort mécanique appliqué aux pales est plus grand à leur première extrémité qu'à leur deuxième extrémité. En fait, cet effort décroit depuis la première extrémité vers la deuxième extrémité. Afin d'assurer une résistance optimale à cet effort, l'invention est telle que les pales ont une épaisseur plus grande à leur première extrémité qu'à leur deuxième extrémité. Cette diminution d'épaisseur a comme avantage supplémentaire que la masse des pales est plus faible que si les pales étaient d'épaisseur constante.

En outre, l'hélice de l'éolienne, dès qu'elle se met en rotation autour de son axe, subit les effets de l'accélération centrifuge; ainsi chaque particule constituant une pale est soumise à une force proportionnelle au produit du carré de la vitesse angulaire et de la distance à l'axe de rotation, et dirigée vers l'extérieur depuis l'axe de rotation. Une portion de pale proche de l'axe de rotation est soumise à un effort plus faible qu'en bout pale où cette force centrifuge est maximale. Afin de réduire les efforts induits par la rotation, l'invention prévoit de réduire l'épaisseur de la pale à mesure que l'on s'éloigne de l'axe de rotation.

Par exemple, l'épaisseur des pales peut être réduite d'environ 50% entre leur première extrémité et leur deuxième extrémité.

De plus, les segments présentent une forme aérodynamique plus coulante qui favorise un lissage sensible du couple moteur transmis par l'arbre au rotor et diminue les pertes d'énergie dans les enroulements du stator.

L'arbre présente *m* passages d'air étant des zones peu encombrées, très allégées, qui présentent une très grande superficie libre pour un passage d'air quasi libre à travers de cet arbre. L'arbre ainsi constitué est moins lourd et présente une résistance élevée à la flexion, ceci comparativement à un arbre plein.

Considérant une section verticale d'une pale ou d'un segment, cette section a une hauteur, qui est la hauteur de la pale ou du segment, et une largeur, qui est la largeur de la pale ou du segment. La largeur de la pale ou du segment est parfois appelée épaisseur pour une pale ou un segment. En effet dans le cadre du présent texte, les termes "largeur d'une pale" et "épaisseur d'une pale" sont équivalents et les termes "largeur d'un segment" et "épaisseur d'un segment" sont équivalents.

Dans le cadre de la présente invention, lorsqu'un premier élément est dit "être formé" de plusieurs éléments, cela signifie que ledit premier élément comprend lesdits plusieurs éléments.

De préférence, dans une réalisation de l'invention où les segments ne comportent que deux pales, chaque passage d'air est formé chaque fois de deux ouvertures. Ces deux ouvertures peuvent être disposées diamétralement opposées sur l'arbre.

La forme hélicoïdale des *n* segments obtenue par le décalage en rotation α / n entre un premier et un dernier segment faisant partie de l'hélice permet une meilleure prise au vent indépendamment de la direction du vent. Les *m* passages d'air sur l'arbre sont aussi décales en rotation dans la même proportion que les *n* segments. Ceci afin de garantir que les *n* segments et les *m* passages d'air soient coïncidents et veiller à obtenir une circulation maximale d'air pour obtenir une vitesse de rotation plus constante de l'hélice et que le couple moteur obtenu soit sensiblement lissé.

Les *m* passages d'air dans l'arbre décalés dans la même proportion que les *n* segments permettent d'obtenir un rotor solide et peu encombrant où l'hélice présente toujours une face au vent. Les passages d'air décalés dans l'arbre permettent un mouvement de l'air passant d'une pale concave à une pale convexe particulièrement intéressant car le flux d'air est alors particulièrement bien canalisé, induisant ainsi un meilleur couple moteur. Chaque passage d'air creusé dans l'arbre affaiblissant la résistance à la flexion de ce dernier dans le plan vertical perpendiculaire, il est aussi intéressant de décaler en rotation ces passages d'air afin de les répartir dans toutes les directions et d'uniformiser l'affaiblissement total résultant; l'arbre creux et ajouré ainsi constitué présente une résistance à la flexion quasi indépendante de la direction de la force appliquée.

Avantageusement, dans le rotor éolien suivant l'invention *n* = *m.* Ceci veut dire que le nombre de segments reliés à l'arbre est égal au nombre de passages d'air présents dans l'arbre. Lorsque *n* = *m* le décalage en rotation des *m* passages d'air coïncide avec le décalage en rotation des *n* segments faisant partie de l'hélice. Donc, chaque segment est au regard de chaque passage d'air, ce qui favorise l'écoulement d'air à travers du rotor, la rotation du rotor devient quasi constante, et le couple moteur est davantage lissé.

De manière avantageuse, le rotor suivant l'invention montre que chaque *n* segment faisant partie de l'hélice est constitué d'une multitude de sub-segments linéaires. L'hélice est ainsi construite comme un empilement de sub-segments. Les sub-segments s'empilent pour donner la grandeur ou taille recherchée au segment. Lesdits sub-segments pouvant être obtenus par des techniques de fabrication par injection en utilisant des moules d'une même taille.

Avantageusement, dans le rotor suivant l'invention l'arbre tubulaire coïncide avec l'axe de rotation dudit rotor. Ceci favorise la rotation du rotor en atténuant les pertes.

Avantageusement, dans le rotor suivant l'invention les segments adjacents faisant partie de l'hélice sont collés entre eux. Ainsi, l'hélice a le même effet qu'une hélice fabriquée en une seule pièce.

Avantageusement, dans le rotor suivant l'invention les *n* segments faisant partie de l'hélice sont montés par rivetage, par vissage, ou par collage sur l'arbre.

Avantageusement, dans le rotor suivant l'invention l'arbre est constitué d'un tube métallique, en particulier en une seule pièce. De préférence, ce tube métallique ne présente pas de points de soudure ce qui aide à garantir l'homogénéité de la section de l'arbre et son équilibrage.

De manière avantageuse, dans le rotor suivant l'invention autour d'une des extrémités de l'arbre est fixé un organe récepteur de la puissance mécanique, en particulier un rotor d'un alternateur. Cet organe est fixé par accouplement direct et donc sans perte de rendement. Le rendement de la génératrice éolienne est ainsi maximisé.

De manière avantageuse, dans le rotor suivant l'invention les segments faisant partie de l'hélice sont fabriqués soit par injection de matières plastiques, en particulier du bioplastique, soit par un métal léger, en particulier l'aluminium ou le magnésium, soit par rotomoulage.

Dans un deuxième mode de réalisation du rotor suivant l'invention les deux pales sont solidarisées entre elles à leur première extrémité par au moins deux cliquets intégrés dans une section circulaire centrée sur l'arbre. Ce mode de réalisation offre une alternative de fabrication, les segments ne sont plus fabriqués séparément en étant en une seule pièce, si non que chaque segment est fabriqué en deux parties qui s'emboîtent l'une dans l'autre. Ceci est adapté à des dimensions plus importantes de génératrices éoliennes.

Avantageusement, dans le rotor éolien suivant l'invention l'angle α est égal à 90° ou à 180°. Le décalage en rotation des *n* segments égal à 90° ou à 180° et la disposition en quinconce des pales faisant partie des lesdits segments, permet d'obtenir une hélice hélicoïdale décalée d'un quart de tour ou d'un demi-tour. Ce décalage fait que les *n* segments présentent toujours une face au vent et ainsi la composante horizontale du vecteur de force résultant est favorisée et réduit de façon sensible les vibrations de l'ensemble.

Dans une réalisation de l'invention, chaque segment est formé de trois pales.

Avantageusement, chaque passage d'air de l'arbre est formé d'ouvertures disposées uniformément autour d'une section de l'arbre.

La présente invention se rapporte également à l'hélice et à l'arbre tubulaire qui forment partie du rotor éolien décrit.

La présente invention se rapporte également à la génératrice éolienne de type Savonius qui comprend le rotor éolien décrit, dont l'hélice et l'arbre tubulaire. Cette génératrice éolienne répond à l'architecture urbaine car elle est peu bruyante et peu encombrante. Elle offre un bon rendement même à partir par des vents très faibles et ne souffre pas de contraintes dues aux changements de direction du vent.

L'invention sera maintenant décrite plus en détails à l'aide des dessins qui illustrent une forme de réalisation préférée du rotor éolien selon l'invention. Dans les dessins :
la figure 1 illustre une vue en éclaté d'une génératrice éolienne comprenant un rotor éolien comprenant une hélice et un arbre tubulaire selon l'invention ;
la figure 2A illustre une vue d'en haut d'un segment, deux pales solidarisées à leur première extrémité par une section circulaire ;
la figure 2B illustre une vue en coupe à mi-hauteur d'un segment, des flèches représentent l'écoulement de l'air entre une pale concave et une pale convexe;
la figure 3 illustre un segment, deux pales solidarisées à leur première extrémité par deux sections circulaires, et un passage d'air concave-convexe est visible ;
la figure 4 illustre un segment selon un deuxième mode de réalisation de l'invention, deux pales solidarisées à leur première extrémité par deux sections circulaires ayant des cliquets intégrés, et un passage d'air concave-convexe est visible ;
la figure 5 montre le décalage en rotation entre les segments d'une hélice, et le décalage α de l'hélice ;
la figure 6 montre un arbre et des m passages d'air décales en rotation d'un quart de tour ;
la figure 7 illustre l'assemblage d'un segment sur un arbre tubulaire faisant partie du rotor éolien selon l'invention ;
la figure 8 illustre une vue éclatée d'un arbre et d'une hélice dans une réalisation de l'invention où chaque segment de l'hélice comprend trois pales;
la figure 9 illustre une vue d'en haut d'une pale dans une réalisation de l'invention où chaque segment de l'hélice comprend trois pales; et
la figure 10 illustre un segment comprenant trois pales.

Dans les dessins une même référence a été attribuée à un même élément ou à un élément analogue.

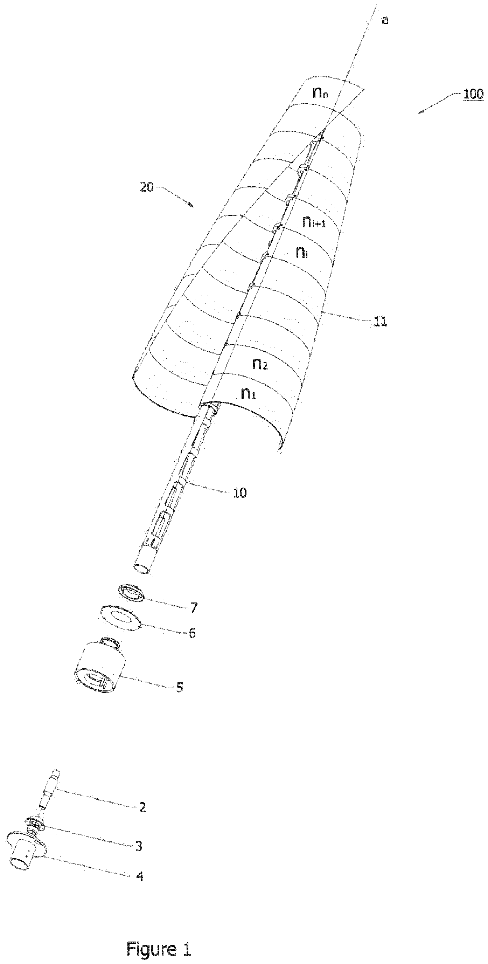

La présente invention concerne un rotor éolien 100 de type Savonius à axe a vertical et comprenant des pales présentant une forme hélicoïdale, ledit rotor destiné à équiper une génératrice éolienne, comme illustré à la figure 1. Suivant l'exemple illustré à la figure 1, une hélice 20 de forme hélicoïdale est composée de dix segments 11 sensiblement identiques et fabriqués séparément en utilisant un même moule pour chaque segment. Le nombre de dix segments 11 n'est pas restrictif et l'hélice 20 peut être formée par un nombre *n* ≥ 1 de segments 11 librement choisi par le fabricant.

Les segments 11 faisant partie de l'hélice 20 sont fabriqués soit par injection de matières plastiques, en particulier du bioplastique, soit par un métal léger, en particulier l'aluminium ou le magnésium, soit par rotomoulage.

Un mode de réalisation de l'invention à deux pales est illustré aux figures 1 à 7.

La génératrice éolienne illustrée à la figure 1, comprend les *n* segments 11 faisant partie de l'hélice 20 qui sont solidarisés à un arbre tubulaire 10 par des moyens de fixation, par exemple par vissage, par rivetage ou par collage. L'hélice 20 et l'arbre 10 forment le rotor éolien 100 qui est la partie mobile de la génératrice éolienne. Un axe de rotation a du rotor 100 coïncide avec l'axe de l'arbre 10. L'arbre 10 est en rotation libre autour d'un arbre de base 2 de préférence par l'intermédiaire de roulements à billes 3. L'arbre de base 2 présente de préférence une extrémité filetée qui permet de solidariser ce dernier à une plaque de base 4 qui supporte également un stator 5 d'un alternateur, qui est un l'organe récepteur de la puissance mécanique. Le stator 5 est fermé dans sa partie supérieure par une coiffe 6 qui, en combinaison avec une contre-coiffe 7 logée à l'extrémité filetée de l'arbre 10, forme un dispositif d'extraction de chaleur et d'humidité internes et de prévention d'introduction de poussière ou d'eau.

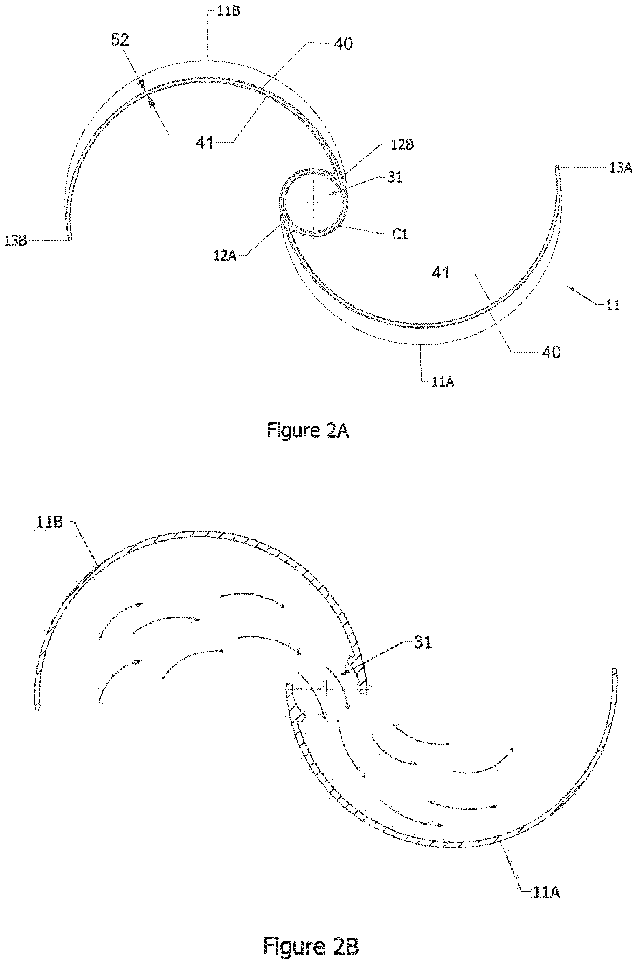

La figure 2A illustre une vue d'en haut d'un segment 11 faisant partie de l'hélice 20. Chaque segment 11 est formé par deux pales 11A, 11B de section semi-circulaire. Les deux pales 11A, 11B présentent une extension axiale hélicoïdale et sont disposées en quinconce par rapport à l'arbre 10 de telle façon à former une pale concave 11B et une pale convexe 11A, face au vent.

L'extension axiale hélicoïdale est une structure qui étend la partie semi-circulaire de la pale en formant une partie d'un cylindre d'axe a. L'extension axiale hélicoïdale est agencée pour recevoir l'arbre 10. Les pales 11A, 11B sont disposées en quinconce par rapport à l'arbre 10 en ce sens qu'elles sont disposées autour de l'arbre 10 de façon à ce que les différentes pales d'un segment soient distantes d'un angle constant.

La figure 2A montre une surface avant 40 des pales 11A, 11B, qui est convexe, et une surface arrière 41 des pales 11A, 11B, qui est concave. La largeur 52, aussi appelée épaisseur, d'une pale 11A, 11B est la distance minimale entre la surface avant de la pale et la surface arrière de ladite pale.

Chaque segment 11 présente une largeur 52 décroissante à partir d'une première 12A respectivement 12B extrémité vers une deuxième 13A respectivement 13B extrémité de chaque pale 11A, 11B. Cette largeur décroissante des pales 11A, 11B joue un rôle déterminant dans la forme hélicoïdale de l'hélice 20 en la rendent plus aérodynamique, et favorisant ainsi une rotation plus constante en évitant qu'elle soit freinée par ses propres caractéristiques physiques. Le freinage non désiré causant une perte d'accélération, doit être évité pour que la rotation soit constante et régulière, et ainsi il soit obtenu un couple moteur constant. De plus, les efforts présents aux points de fixation entre les pales 11A, 11B et l'arbre 10 à hauteur de leur première extrémité 12A respectivement 12B sont diminués par une réduction du poids des pales 11A, 11B obtenue grâce à ladite largeur décroissante. Tout ceci signifie un meilleur rendement du rotor, et un couple moteur sensiblement lissé.

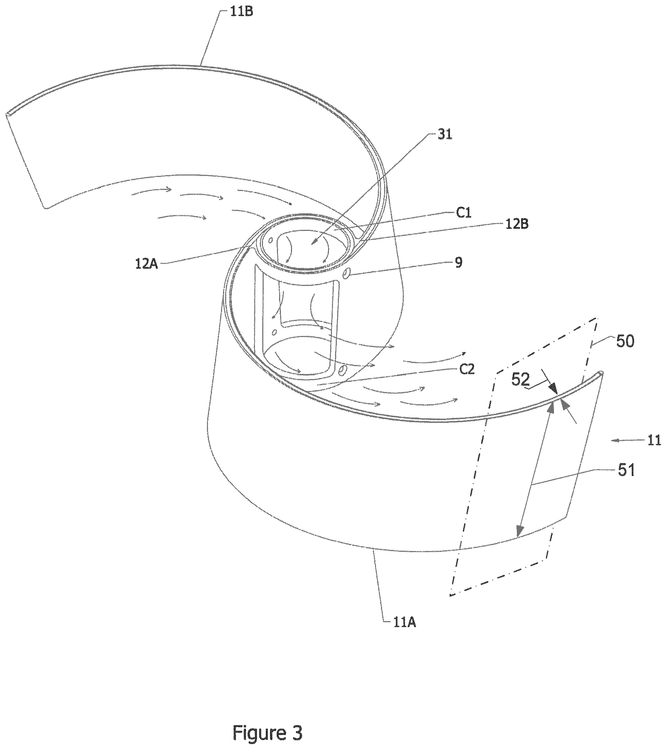

A la figure 3 on voit que les deux pales 11A, 11B sont solidarisées entre elles à leur première 12A respectivement 12B extrémité, c'est-à-dire que deux sections circulaires C₁, C₂ solidarisent entre elles les deux pales 11A, 11B. Les deux sections circulaires C₁, C₂ peuvent présenter des orifices 9 prévus pour recevoir de moyens de fixation, par exemple des rivets ou des vis de fixation. L'une des deux sections circulaires C₂ est disposée dans une partie basse du segment 11, et l'autre section circulaire C₁ est disposée dans une partie haute du segment 11.

Les deux sections circulaires C₁, C₂ sont de préférence d'une hauteur limitée, par exemple située entre 5 et 15 % de la hauteur 51 totale du segment 11. Il est recherché que lorsque le segment 11 est monté sur l'arbre 10, un passage d'air suffisant entre la pale concave 11B et la pale convexe 11A soit laissé. Ainsi, la pale concave 11B et la pale convexe 11A forment ensemble un passage 31 d'air concave-convexe entre elles. Ce passage 31 d'air est illustré schématiquement à la figure 3; des flèches illustrent l'écoulement d'air ou un flux d'air a travers le passage 31 d'air concave-convexe.

La figure 3 montre aussi un plan 50 vertical. En réalisant une section verticale d'une pale le long de ce plan 50, cette section a une hauteur 51, qui est la hauteur de la pale 11A, et une largeur 52, qui est la largeur de la pale 11A et est parfois appelée épaisseur de cette pale 11A. Le même raisonnement peut s'appliquer à un segment 11.

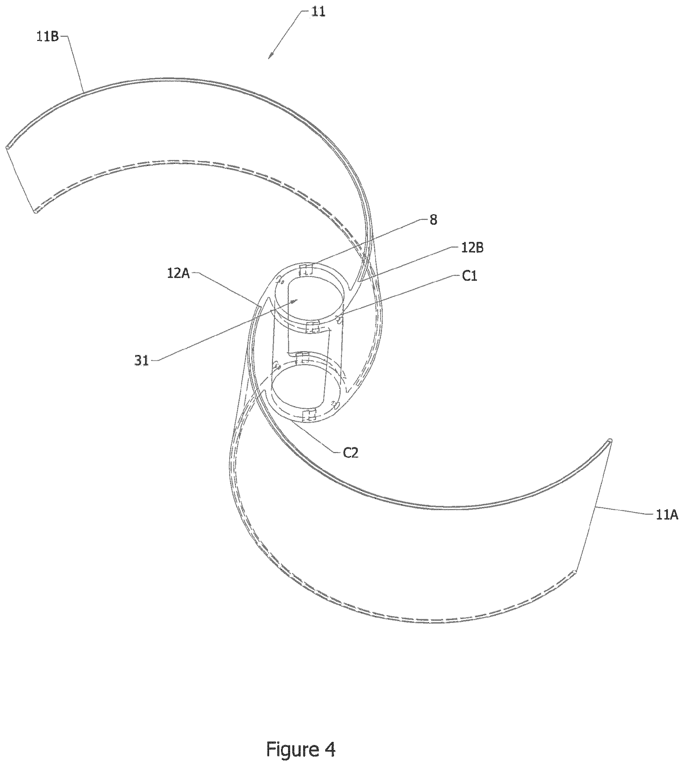

La figure 4 illustre un deuxième mode de réalisation de l'invention qui permet de fabriquer des segments 11 d'une taille plus importante. Suivant ce mode, le segment 11 composé par deux pales 11A, 11B étant solidarisées entre elles à leur première 12A respectivement 12B extrémité, tant à la partie haute C₁ et basse C₂ du segment, par exemple par des moyens de fixation comme des cliquets 8 intégrés dans chaque section circulaire C₁, C₂. Cet artifice de fabrication a pour objectif d'éviter les limitations de grandeur du segment 11 et de le maintenir économiquement injectable. Par exemple, un rayon de 200 mm est une grandeur adéquate pour que le segment 11 soit fabriqué par injection en utilisant un seul moule ; des grandeurs plus importantes sont très compliquées à fabriquer avec un seule moule. Donc, fabriquer des segments 11 en deux parties facilite la tâche et maintien le procédé de fabrication à des coûts viables et/ou raisonnables.

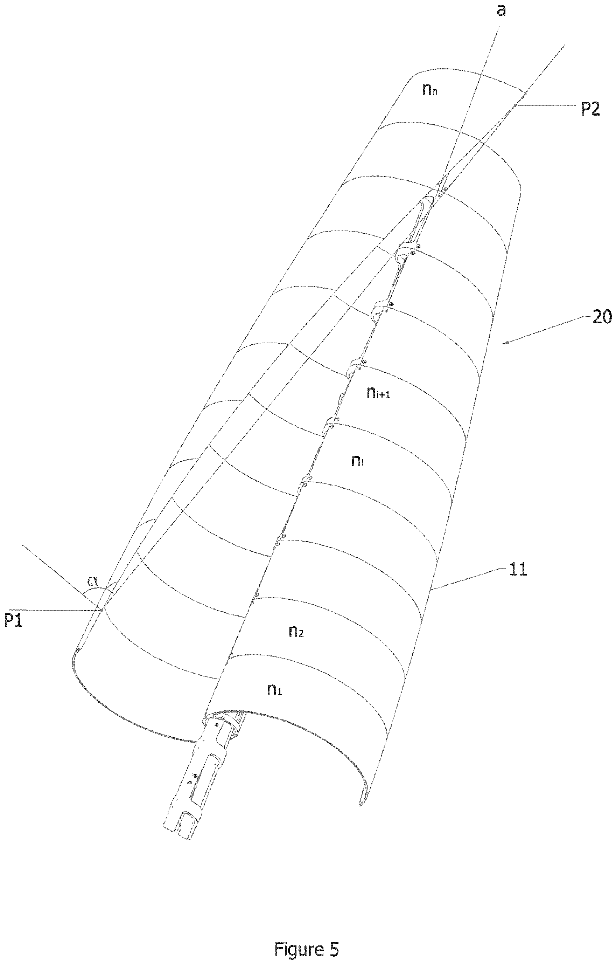

La figure 5 montre les *n* segments 11 faisant partie de l'hélice 20 montés sur l'arbre 10. Les *n* segments sont disposés de telle façon qu'un premier P₁ point situé sur la deuxième extrémité d'un premier *n*₁ des *n* segments 11, et un deuxième P₂ point situé sur la deuxième extrémité d'un dernier *nₙ* des *n* segments 11 au même endroit que le premier P₁ point, sont décales en rotation sur un angle a. De préférence l'angle α est égal à 90° ou à 180°. Le décalage en rotation du segment *nᵢ* par rapport au segment *n*_{*i*+1}, dont 1 ≤ *i < n,* faisant partie de l'hélice 20 est la relation α / *n.* Selon l'exemple illustré avec dix segments le décalage en rotation est égal à 90°, et le nombre de segments 11 est égal à dix, donc la relation entre le décalage en rotation et le nombre de segments 11 est égal à 9°. C'est-à-dire que le décalage en rotation α / *n* entre les segments 11 adjacents est de chaque fois 9°. Ce décalage dépend bien entendu du nombre de segments 11 et de l'angle a. Le fait que l'angle α soit au moins égal à 90° permet qu'une partie concave suffisante des pales 11A, 11B soit toujours face au vent. Plus l'angle α est grand, moins la section d'hélice offerte au vent varie lors de la rotation, plus faibles sont les fluctuations de couple moteur et de force horizontale résultante et plus réduites sont les vibrations engendrées tant dans la structure que dans le générateur électrique.

Chaque *n* segment 11 faisant partie de l'hélice 20 peut être constitué d'une multitude de sub-segments linéaires. Ceci signifie que le nombre de segments 11 faisant partie de l'hélice 20 n'a aucune restriction. Un segment formé d'une multitude de sub-segments permet qu'il soit possible de construire un segment plus grand, et qu'il existe une plus grande flexibilité dans les procédés de construction. Ainsi, un grand choix dans les options de fabrication du rotor éolien 100 est proposé.

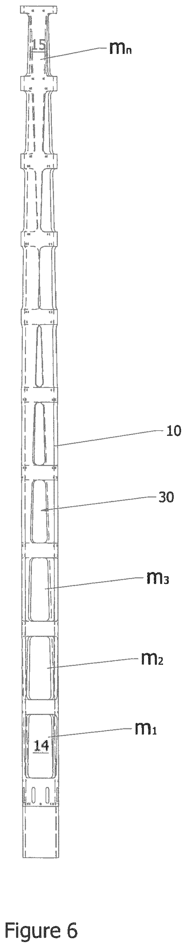

La figure 6 illustre l'arbre 10 présentant un ensemble de *m* ≥ 1 passages 30 d'air. Chaque passage 30 d'air étant formé chaque fois par deux ouvertures 14, 15 disposées diamétralement opposées sur l'arbre 10. Cet arbre 10 de section circulaire suffisante est constitué d'un tube, de préférence métallique, présentant un diamètre compatible avec le diamètre des sections circulaires C₁, C₂ des segments 11 afin que ledit arbre 10 puisse être glissé au centre des segments 11 empilés formant l'hélice 20. Ledit arbre 10 est constitué de préférence en une seule pièce, et de préférence sans soudure pour garantir l'homogénéité de l'arbre 10 et favoriser son équilibrage.

Les *m* passages 30 d'air sur l'arbre 10 réduisent fortement l'obstruction au vent causé par le tube et favorisent l'écoulement d'air à travers de celui-ci. En outre, les *m* passages 30 d'air font de l'arbre 10 une structure allégée tout en conservant la rigidité nécessaire pour soutenir l'hélice 20 formée par les segments 11 montés sur l'arbre 20.

Une autre caractéristique particulièrement intéressante de cet arbre 10 est sa résistance élevée à la flexion, comparativement à celle d'un arbre plein. Dans un exemple de réalisation particulière, le tube métallique utilisé pour fabriquer l'arbre 10 présente un diamètre extérieur de 73 mm et une épaisseur de paroi de 7 mm, avec une résistance à la flexion identique à celle d'un arbre plein d'un diamètre de 64 mm et de la même matière et d'une masse réduite de moitié.

Les *m* passages 30 d'air présents sur l'arbre 10 sont chaque fois décalés l'un par rapport à l'autre. Le décalage en rotation de chaque passage *mᵢ* par rapport au passage *m*_{*i*+1}, dont 1 ≤ *i* < *m,* est la relation α / *m.* Dans le cas *n* = *m* le passage 30 d'air est parfaitement coïncident avec le passage 31 d'air concave-convexe entre les pales. Dans ce cas la superficie du passage d'air est maximale, et le rotor éolien 100 fonctionne dans les meilleures conditions montrant des paramètres physiques optimisés.

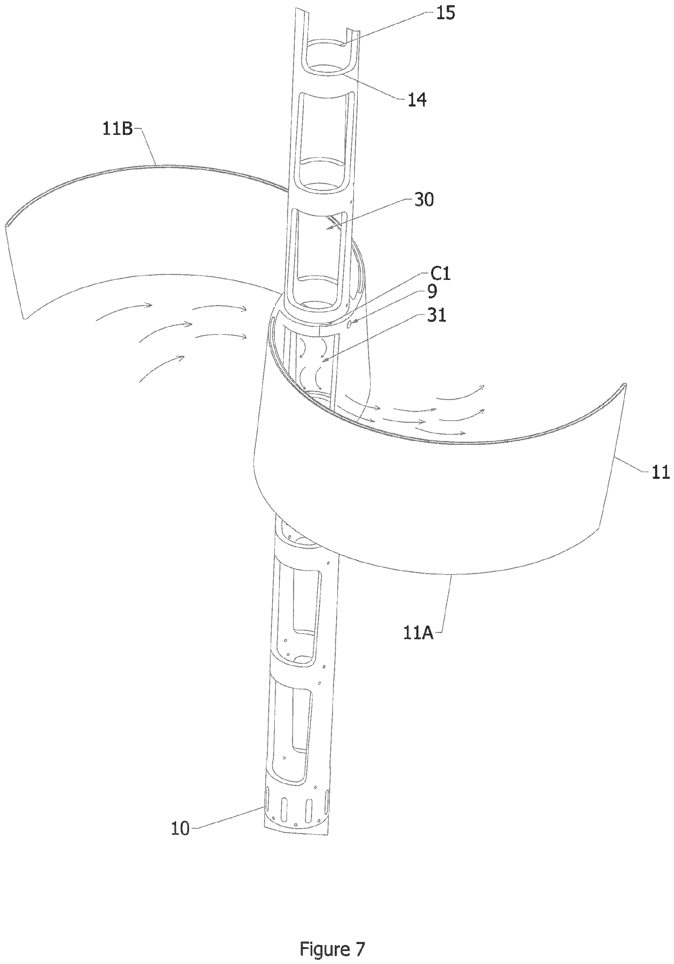

Pour des raison de clarté la figure 7 présente un seul segment 11 monté sur l'arbre 10, cela s'applique a chaque *n* segments 11 monté sur ledit arbre 10. La figure montre le segment *nᵢ* ayant le passage 31 d'air concave-convexe ménagé dans sa partie centrale. Ce segment 11 est assemblé, soit par rivetage, soit par vissage, soit par collage, au regard du passage 30 d'air sur l'arbre 10. On voit clairement que le passage 31 d'air concave-convexe est coïncident avec le passage 30 d'air de l'arbre 10. Par des flèches, sur la figure, on représente l'écoulement d'air qui fait que le segment 11 tourne en sens horaire. L'air passe à travers les passages 31 et 30, c'est-à-dire que l'air traverse l'ouverture formée par le segment 11 et par l'arbre 10 depuis la pale concave 11B vers la pale convexe 11A. Cette zone dégagée permet un passage maximal d'air pour que la rotation du rotor éolien 100 soit ainsi favorisée. Ce libre passage à l'écoulement d'air entre les pales 11A, 11B à travers l'arbre 10, favorise que l'hélice 20 puisse tourner d'une manière régulière et ainsi que le couple moteur produit par ledit couple moteur soit sensiblement lissé.

Le fonctionnement du rotor 100 et de la génératrice éolienne qui le comprend, qui vient d'être décrit est basé sur le principe de la traînée différentielle. Chaque segment 11 faisant partie de l'hélice 20 présente face au vent, lorsqu'il est en position transversale, une surface concave (pale concave 11B), et une surface convexe (pale convexe 11A). Le vent exerce sur ces surfaces des forces d'intensités très différentes, la résultante étant un couple qui engendre une rotation de l'ensemble. Lorsque la vitesse du vent est suffisante, l'inertie du segment 11 faisant partie de l'hélice 20 lui permet de faire plus d'un demi-tour, et grâce a sa symétrie axiale, de présenter les mêmes surfaces au vent et d'être soumis au même couple de rotation qu'un demi-tour plus tôt. Entre ces deux positions transversales, le couple résultant diminue fortement. Le couple moteur d'un segment 11 d'hélice 20, qui est fort semblable au rotor original de Savonius, est donc variable avec une fréquence double de celle de rotation du rotor 100, sa moyenne restant positive. C'est pour cette raison que chaque segment 11 présente une forme légèrement hélicoïdale, le segment *nᵢ* est décalé de quelques degrés par rapport au segment *n*_{*i*+1}, de sorte que l'empilement de segments 11 composant l'hélice 20 présente un torsion d'un quart de tour (a = 90°) entre le bas (premier segment) et le haut (dernier segment) de l'hélice 20. Le couple moteur résultant de l'addition simultanée des couples individuels de chaque segment 11 est ainsi sensiblement lissé. Il s'ensuit que moins de vibrations mécaniques et moins d'harmoniques sont générés au sein des enroulements de l'alternateur. Donc, le rotor 100 et l'éolienne décrits présentent une amélioration pour la fabrications d'éoliennes dans un monde qui requiert plus d'énergies renouvelables.

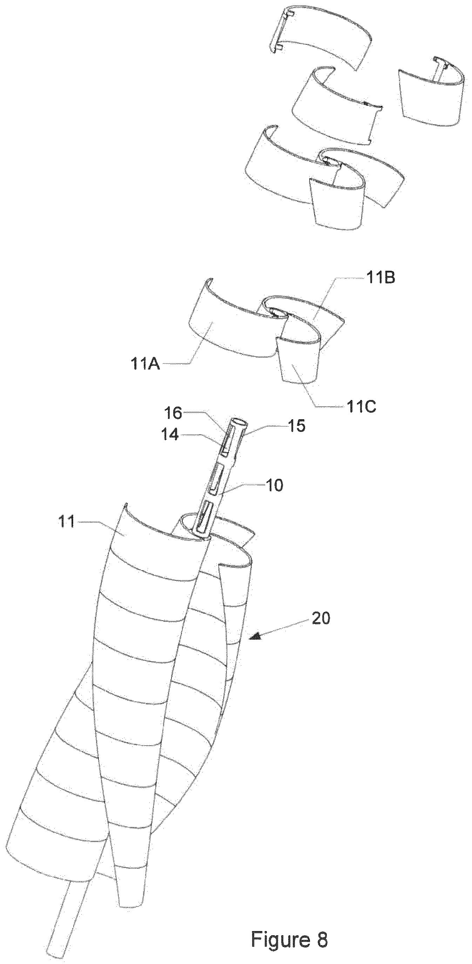

Dans le mode de réalisation de l'invention illustré aux figures 1 à 7, chaque segment 11 ne comprend que deux pales 11A, 11B. Un mode de réalisation de l'invention à trois pales est illustré aux figures 8 à 10. Dans ce mode de réalisation de l'invention, chaque segment 11 comprend trois pales 11A, 11B, 11C.

La figure 8 illustre une vue éclatée de l'arbre 10 et de l'hélice.20. Les segments 11 comprennent trois pales 11A, 11B, 11C. L'arbre 10 comprend trois ouvertures 14, 15, 16 par segment. Les trois ouvertures 14, 15, 16 sont préférentiellement disposées uniformément autour d'une section de l'arbre 10. Les trois ouvertures 14, 15, 16 forment le passage d'air 30.

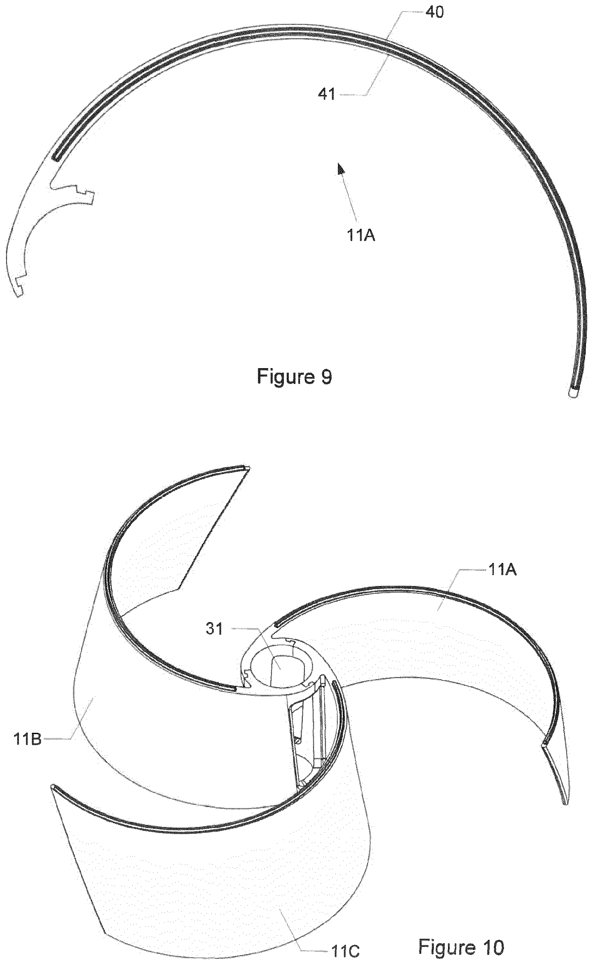

La figure 9 illustre une vue d'en haut d'une pale 11A avec sa surface avant 40 et sa surface arrière 41.

La figure 10 illustre un segment 11 comprenant trois pales 11A, 11B, 11C. Les pales 11A, 11B, 11C créent ensemble le passage 31 d'air.

D'autres modes de réalisation de l'invention, où chaque segment 11 comprend au moins deux pales sont aussi possibles tout en restant dans le cadre de l'invention.

En résumé, l'invention peut être décrite comme suit. Rotor éolien 100 de type Savonius comprenant un arbre tubulaire 10 sur lequel sont montés un nombre *n* ≥ 1 de segments 11 faisant partie d'une hélice 20, chaque segment 11 étant formé par deux pales 11A et 11B de section semi-circulaire, les deux pales 11A et 11B présentant une extension axiale hélicoïdale et étant disposées en quinconce par rapport à l'arbre 10 de telle façon à former une pale concave 11B et une pale convexe 11A qui forment ensemble un passage 31 d'air concave-convexe à travers l'arbre 10 ; chaque pale présentant une première 12A et 12B et une deuxième 13A et 13B extrémités, les deux pales 11A et 11B étant fixées par leur première 12A et 12B extrémité à l'arbre 10 ; lequel arbre 10 présente un ensemble de *m* ≥ 1 passages 30 d'air,
ledit rotor 100 étant caractérisé en ce que :
chaque segment 11 présente une épaisseur décroissante à partir de la première 12A et 12B extrémité vers la deuxième 13A et 13B extrémité de chaque pale 11A et 11B, les *n* segments 11 faisant partie de l'hélice 20 sont montés sur l'arbre 10 de tel façon qu'un premier (P₁) point situé sur la deuxième extrémité d'un premier des *n* segments 11 et un deuxième (P₂) point situé sur la deuxième extrémité d'un dernier des *n* segments 11 au même endroit que le premier (P₁) point, sont décales en rotation un angle a, le décalage en rotation du segment *nᵢ* par rapport au segment *n*_{*i*+1}, dont 1 ≤ *i* < *n*, faisant partie de l'hélice 20 est la relation α / *n* ; et les *m* passages 30 d'air dudit ensemble sont chaque fois décalés l'un par rapport à l'autre de telle façon que le *m*^{ième} passage 30 d'air est décalé en rotation sur un angle α par rapport au premier des *m* passages 30 d'air.

En d'autres termes, l'invention se rapporte à un rotor de type Savonius comprenant un arbre tubulaire sur lequel sont montés un nombre n ≥ 1 de segments faisant partie d'une hélice. Chaque segment formé par deux pales semi-circulaires, d'extension axiale hélicoïdale, disposées en quinconce par rapport à l'arbre, et forment un passage d'air concave-convexe à travers l'arbre. L'arbre présente un ensemble de m ≥ 1 passages d'air formés par deux ouvertures. Chaque segment présente une largeur décroissante vers la deuxième extrémité de chaque pale. Un premier point sur la deuxième extrémité d'un premier des n segments et un deuxième point sur la deuxième extrémité d'un dernier des n segments sont décales en rotation un angle a. Le décalage en rotation des segments ni et ni+1 est la relation α / n. Le mième passage d'air est décalé en rotation sur un angle α par rapport au premier des m passages d'air.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Rotor éolien (100) de type Savonius comprenant un arbre tubulaire (10) sur lequel sont montés un nombre *n* ≥ 1 de segments (11) faisant partie d'une hélice (20), chaque segment (11) étant formé par deux pales (11A et 11B), les deux pales (11A et 11B) présentant une extension axiale hélicoïdale et étant disposées en quinconce par rapport à l'arbre (10) de telle façon à former une pale concave (11B) et une pale convexe (11A); chaque pale présentant une première (12A et 12B) et une deuxième (13A et 13B) extrémités, les deux pales (11A et 11B) étant fixées par leur première (12A et 12B) extrémité à l'arbre (10) ;, les *n* segments (11) faisant partie de l'hélice (20) étant montés sur l'arbre (10) de tel façon qu'un premier (P₁) point situé sur la deuxième extrémité d'un premier des *n* segments (11) et un deuxième (P₂) point situé sur la deuxième extrémité d'un dernier des *n* segments (11) au même endroit que le premier (P₁) point, sont décalés en rotation un angle a, le décalage en rotation du segment *nᵢ* par rapport au segment *n*_{*i*+1}, dont 1 ≤ *i* < *n*, faisant partie de l'hélice (20) est la relation α / *n* ; et les *m* passages (30) d'air dudit ensemble étant chaque fois décalés l'un par rapport à l'autre de telle façon que le *m*^{ième} passage (30) d'air est décalé en rotation sur un angle α par rapport au premier des *m* passages (30) d'air,
ledit rotor (100) étant **caractérisé en ce que** :
les deux pales (11A et 11B) sont de section semi-circulaire, la pale concave (11B) et la pale convexe (11A) forment ensemble un passage (31) d'air concave-convexe à travers l'arbre (10), l'arbre (10) présente un ensemble de *m* ≥ 1 passages (30) d'air, chaque segment (11) présente une largeur (52) décroissante à partir de la première (12A et 12B) extrémité vers la deuxième (13A et 13B) extrémité de chaque pale (11A et 11B),.

2. Rotor éolien (100) selon la revendication 1, dans lequel *n* = *m.*

3. Rotor éolien (100) la revendication 1 ou 2, dans lequel l'arbre tubulaire (10) coïncide avec l'axe de rotation de ledit rotor (100).

4. Rotor éolien (100) selon l'une quelconque des revendications 1 à 3, dans lequel les segments (11) adjacents faisant partie de l'hélice (20) sont collés entre eux.

5. Rotor éolien (100) selon l'une des revendications précédentes, dans lequel les *n* segments (11) faisant partie de l'hélice (20) sont montés par rivetage ou par vissage sur l'arbre (10).

6. Rotor éolien (100) selon l'une des revendications précédentes, dans lequel l'arbre (10) est constitué d'un tube métallique, en particulier en une seule pièce.

7. Rotor éolien (100) selon l'une des revendications précédentes, dans lequel autour d'une des extrémités de l'arbre (10) est fixé un organe récepteur de la puissance mécanique, en particulier un rotor d'un alternateur.

8. Rotor éolien (100) selon l'une des revendications précédentes, dans lequel les segments (11) faisant partie de l'hélice (20) sont fabriqués soit par injection de matières plastiques, en particulier du bioplastique, soit par un métal léger, en particulier l'Aluminium ou le Magnésium, soit par rotomoulage.

9. Rotor éolien (100) selon l'une des revendications précédentes, dans lequel l'arbre tubulaire (10) est creux et ajouré..

10. Rotor éolien (100) selon l'une des revendications précédentes, dans lequel l'angle α est égal à 90° ou à 180º.

11. Rotor éolien (100) selon l'une des revendications précédentes, dans lequel chaque segment (11) est formé de trois pales (11A, 11B et 11C).

12. Rotor éolien (100) selon l'une des revendications précédentes, dans lequel chaque passage (30) d'air de l'arbre est formé d'ouvertures (14, 15, 16) disposées uniformément autour d'une section de l'arbre.

13. Hélice (20) faisant partie d'un rotor éolien (100) suivant l'une quelconque des revendications 1 à 12.

14. Arbre tubulaire (10) faisant partie d'un rotor éolien (100) suivant l'une quelconque des revendications 1 à 12.

15. Génératrice éolienne de type Savonius comprenant le rotor éolien (100) selon l'une quelconque des revendications 1 à 12.

## Patentansprüche

1. Savonius-Rotor (100) eines Windrades, umfassend eine rohrförmige Welle (10), auf der eine Anzahl *n* ≥ 1 von Segmenten (11), die Teil einer Schraube (20) sind, montiert ist, wobei jedes Segment (11) von zwei Flügeln (11A und 11B) gebildet wird, wobei die zwei Flügel (11A und 11B) eine schraubenförmige axiale Ausdehnung aufweisen und in Bezug auf die Welle (10) versetzt angeordnet sind, so dass sie einen konkaven Flügel (11B) und einen konvexen Flügel (11A) bilden; wobei jeder Flügel ein erstes (12A und 12B) und ein zweites (13A und 13B) Ende aufweist, wobei die zwei Flügel (11A und 11B) über ihr erstes (12A und 12B) Ende an der Welle (10) befestigt sind;, wobei die *n* Segmente (11), die Teil der Schraube (20) sind, so auf der Welle (10) montiert sind, dass ein erster (P₁) Punkt, der sich auf dem zweiten Ende eines ersten der *n* Segmente (11) befindet, und ein zweiter (P₂) Punkt, der sich auf dem zweiten Ende eines letzten der *n* Segmente (11) an der gleichen Stelle wie der erste (P₁) Punkt befindet, in einem Winkel α drehversetzt sind, wobei der Drehversatz des Segments *nᵢ* in Bezug auf das Segment *n*_{*i*+*1*}, wobei 1 ≤ *i* < *n,* die Teil der Schraube (20) sind, dem Verhältnis α / *n* entspricht; und wobei die *m* Luftdurchlässe (30) der Gesamteinheit jedes Mal so zueinander versetzt sind, dass der *m.* Luftdurchlass (30) in Bezug auf den ersten der *m* Luftdurchlässe (30) in einem Winkel α drehversetzt ist,
wobei der Rotor (100) **dadurch gekennzeichnet ist, dass**:
die zwei Flügel (11A und 11B) im Schnitt halbkreisförmig sind, wobei der konkave Flügel (11B) und der konvexe Flügel (11A) zusammen einen konkav-konvexen Luftdurchlass (31) durch die Welle (10) bilden, die Welle (10) eine Gesamteinheit von *m* ≥ 1 Luftdurchlässen (30) aufweist, jedes Segment (11) eine abnehmende Breite (52) ausgehend von dem ersten (12A und 12B) Ende zu dem zweiten (13A und 13B) Ende jedes Flügels (11A und 11B) aufweist,.

2. Rotor (100) eines Windrades nach Anspruch 1, wobei *n* = *m.*

3. Rotor (100) eines Windrades nach Anspruch 1 oder 2, wobei die rohrförmige Welle (10) mit der Drehachse des Rotors (100) zusammenfällt.

4. Rotor (100) eines Windrades nach einem der Ansprüche 1 bis 3, wobei die nebeneinander liegenden Segmente (11), die Teil der Schraube (20) sind, miteinander verklebt sind.

5. Rotor (100) eines Windrades nach einem der vorstehenden Ansprüche, wobei die *n* Segmente (11), die Teil der Schraube (20) sind, durch Vernietung oder durch Verschraubung auf der Welle (10) montiert sind.

6. Rotor (100) eines Windrades nach einem der vorstehenden Ansprüche, wobei die Welle (10) von einem Metallrohr, insbesondere aus einem einzigen Stück, gebildet wird.

7. Rotor (100) eines Windrades nach einem der vorstehenden Ansprüche, wobei rund um eines der Enden der Welle (10) ein Aufnahmeelement für die mechanische Kraft, insbesondere ein Rotor eines Wechselstromgenerators, befestigt ist.

8. Rotor (100) eines Windrades nach einem der vorstehenden Ansprüche, wobei die Segmente (11), die Teil der Schraube (20) sind, entweder durch Kunststoff-Spritzguss, insbesondere von Biokunststoff, oder durch ein Leichtmetall, insbesondere Aluminium oder Magnesium, oder durch Rotationsformen gefertigt werden.

9. Rotor (100) eines Windrades nach einem der vorstehenden Ansprüche, wobei die rohrförmige Welle (10) hohl und durchbrochen ist..

10. Rotor (100) eines Windrades nach einem der vorstehenden Ansprüche, wobei der Winkel α 90° oder 180° beträgt.

11. Rotor (100) eines Windrades nach einem der vorstehenden Ansprüche, wobei jedes Segment (11) von drei Flügeln (11A, 11B und 11C) gebildet wird.

12. Rotor (100) eines Windrades nach einem der vorstehenden Ansprüche, wobei jeder Luftdurchlass (30) der Welle von Öffnungen (14, 15, 16) gebildet wird, die gleichmäßig rund um ein Teilstück der Welle angeordnet sind.

13. Schraube (20), die Teil eines Rotors (100) eines Windrades nach einem der Ansprüche 1 bis 12 ist.

14. Rohrförmige Welle (10), die Teil eines Rotors (100) eines Windrades nach einem der Ansprüche 1 bis 12 ist.

15. Savonius-Generator eines Windrades, umfassend den Rotor (100) eines Windrades nach einem der Ansprüche 1 bis 12.

## Claims

1. Wind turbine rotor (100) of the Savonius type comprising a tubular shaft (10) on which are mounted a number *n* ≥ 1 of segments (11) being part of a propeller (20), with each segment (11) being formed by two blades (11A and 11B), with the two blades (11A and 11B) having a helical axial extension and being arranged in a staggered manner relative to the shaft (10) in such a way as to form a concave blade (11B) and a convex blade (11A); with each blade having a first (12A and 12B) and a second (13A and 13B) end, the two blades (11A and 11B) being fixed by their first (12A and 12B) end to the shaft (10); the n segments (11) being part of the propeller (20) being mounted on the shaft (10) in such a way that a first (P₁) point located on the second end of a first of the *n* segments (11) and a second (P₂) point located on the second end of a last of the *n* segments (11) at the same location as the first (P₁) point, are offset in rotation by an angle a, the rotational offset of the segment *nᵢ* with respect to the segment n_{*i*+1}, of which 1 ≤ *i* < *n,* forming part of the propeller (20) is the relationship α / *n*; and the m air passages (30) of said set are each time offset with respect to the other in such a way that the *m^{th}* air passage (30) is rotationally offset by an angle α relative to the first of the m air passages (30),
said rotor (100) being **characterised in that**:
the two blades (11A and 11B) are of semi-circular section, the concave blade (11B) and a convex blade (11A) together form a concave-convex air passage (31) through the shaft (10), the shaft (10) has a set of *m* ≥ 1 air passages (30), each segment (11) has a width (52) that decreases from the first (12A and 12B) end towards the second (13A and 13B) end of each blade (11A and 11B).

2. Wind turbine rotor (100) according to claim 1, wherein *n* = *m.*

3. Wind turbine rotor (100) according to claim 1 or 2, wherein the tubular shaft (10) coincides with the axis of rotation of said rotor (100).

4. Wind turbine rotor (100) according to any of claims 1 to 3, wherein the adjacent segments (11) forming part of the propeller (20) are glued together.

5. Wind turbine rotor (100) according to one of the preceding claims, wherein the *n* segments (11) forming part of the propeller (20) are mounted via riveting or by screwing in the shaft (10).

6. Wind turbine rotor (100) according to one of the preceding claims, wherein the shaft (10) is comprised of a metal tube, in particular in a single piece.

7. Wind turbine rotor (100) according to one of the preceding claims, wherein around one of the ends of the shaft (10) is fixed a receiving member for the mechanical power, in particular a rotor of an alternator.

8. Wind turbine rotor (100) according to one of the preceding claims, wherein the segments (11) forming part of the propeller (20) are manufactured by injecting plastic materials, in particular bioplastic, or with a light metal, in particular Aluminium or Magnesium, or by rotational moulding.

9. Wind turbine rotor (100) according to one of the preceding claims, wherein the tubular shaft (10) is hollow and perforated.

10. Wind turbine rotor (100) according to one of the preceding claims, wherein the angle α is equal to 90° or to 180°.

11. Wind turbine rotor (100) according to one of the preceding claims, wherein each segment (11) is formed of three blades (11A, 11B and 11C).

12. Wind turbine rotor (100) according to one of the preceding claims, wherein each air passage (30) of the shaft is formed of openings (14, 15, 16) arranged uniformly around a section of the shaft.

13. Propeller (20) being part of a wind turbine rotor (100) according to any of claims 1 to 12.

14. Tubular shaft (10) being part of a wind turbine rotor (100) according to any of claims 1 to 12.

15. Wind turbine generator of the Savonius type comprising the wind turbine rotor (100) according to any of claims 1 to 12.
